# EUROPÄISCHE PATENTSCHRIFT

(11) **EP 2 698 050 B1**
(45) Veröffentlichungstag und Bekanntmachung des Hinweises auf die Patenterteilung: **23.09.2020**
(21) Anmeldenummer: 12749459.9
(22) Anmeldetag: 20.02.2012
(51) Int. Cl.: A01B 3/46, A01B 15/14, A01B 3/26, A01B 63/32, A01B 73/00

(54) **DURCH DEN SCHUB EINES ZUGFAHRZEUGS BETÄTIGTER HYDRAULISCHER PFLUG**
HYDRAULIC PLOUGH ACTUATED BY THE THRUST FROM A TOWING VEHICLE
CHARRUE HYDRAULIQUE ACTIONNÉE PAR LA FORCE DE POUSSÉE D'UN VÉHICULE TRACTEUR

(30) Priorität: 22.02.2011 ES 201100195 P
(43) Veröffentlichungstag der Anmeldung: 19.02.2014
(73) Patentinhaber: Santamaría Martinez, Julio, 09007 Burgos (ES)
(72) Erfinder: Santamaría Martinez, Julio, 09007 Burgos (ES)
(74) Vertreter: Herrmann, Franz
(86) Internationale Anmeldenummer: PCT/ES2012/000036
(87) Internationale Veröffentlichungsnummer: WO 2012/113945

(56) Entgegenhaltungen:
- EP-A1- 0 075 087
- EP-A1- 0 199 406
- WO-A1-93/02542
- DE-A1- 3 136 869
- DE-A1- 3 136 870
- DE-B- 1 216 597
- DE-C- 939 960
- ES-A1- 8 103 907
- ES-T3- 2 027 025
- ES-T3- 2 128 863
- ES-U- 1 048 062
- ES-U- 1 056 860
- FR-A1- 2 512 628
- FR-A1- 2 549 339
- US-A- 5 076 368

## Beschreibung

Diese Erfindung betrifft ein Gerät zum Pflügen des Ackerbodens mit hydraulischem Antrieb, der von einem Zugfahrzeug nicht gezogen, sondern geschoben wird. Mit dem nachfolgend beschriebenen System spart der Betreiber rund 60 % Diesel, Zeit, Geld etc.

Das betreffende Gerät weist wesentliche neue Merkmale auf sowie beachtliche Vorteile gegenüber den nach dem heutigen Stand der Technik bekannten und zum gleichen Zweck verwendeten Mitteln.

Pflüge sind aufgrund der umfangreichen Nutzung in der Landwirtschaft weithin bekannte Werkzeuge, mit denen der Boden vor der Aussaat vorbereitet, gelockert und gewendet wird. Obwohl der Pflug schon seit vielen Jahrhunderten verwendet wird und mit der Zeit stets weiterentwickelt wurde, weisen die heutigen Pflüge eine Reihe von Nachteilen auf, die sich auf die Betreiber finanziell, körperlich und zeitlich negativ auswirken. Nach der Bearbeitung des Boden mit dem traditionellen Pflug auf 40 cm Arbeitsbreite und 25 cm Tiefe ist der Boden zerfurcht oder durchschnitten und beim Einsatz der Egge bzw. des Grubbers entstehen große und kleine Brocken, die zu erheblichen Erschütterungen und Sprünge des Zugfahrzeugs führen und somit die Arbeit des Fahrers erschweren und unangenehm machen. Um den Acker halbwegs ordentlich zu bearbeitet, sind hierbei der Zeitaufwand und der Dieselverbrauch größer. Zuweilen wird beim Einsatz der Egge oder des Grubbers viel Staub aufgewirbelt und wenn der Boden nicht ordentlich vorbereitet ist, gehen nicht alle Samen auf, was zu einem Verlust von ca. 15 bis 20 % des Saatguts führt. Ein weiterer zu berücksichtigender Nachteil liegt darin, dass der Fahrer beim Pflügen mit dem Schlepper ständig nach hinten schauen muss, was oft zu Schmerzen und Unwohlsein führt. Des Weiteren wird der Dünger beim Einsatz des Düngerstreuers nicht gleichmäßig verstreut, was sich negativ auf das Endprodukt auswirkt. Pro Quadratmeter muss mehr Regen fallen, um den Boden mit dem traditionellen Pflug zu bearbeiten. Als Fazit ist festzustellen, dass mit dem traditionellen Pflugsystem der Boden nicht ordentlich bearbeitet und aufgelockert wird, Saatgut geht verloren, die Samen werden nicht richtig gedüngt, es werden mehr Maschinen oder Anbaugeräte benötigt, die Felder müssen mehrmals durchfahren werden, zuerst zum Pflügen, dann zum Düngen, Eggen oder Grubbern, Sähen und Eggen, Walzen, wofür viel Zeit aufgewendet werden muss, Geräte werden abgenutzt, viele Stunden werden auf dem Schlepper verbracht, der Arbeiter erschöpft und es wird natürlich viel Diesel verbraucht, was ein finanzieller und ökologischer Nachteil bedeutet.

Die vorgeschlagene Erfindung möchte eine ökologische und benutzerfreundliche Lösung bieten, mit der die Pflugarbeit beschleunigt sowie wirkungsvoller und wirtschaftlicher gestaltet wird und gleichzeitig die Kosten, der Zeitaufwand und die Ermüdung der Arbeiter verringert werden.

Der Anwendungsbereich des Patents zu dieser Erfindung betrifft den Bereich der landwirtschaftlichen Maschinen, und im Konkreten den Bereich der hydraulischen Pflüge.

Nach dem Stand der Technik gibt es einige Dokumente zu der betreffenden Erfindung, auch wenn in keinem dieser Dokumente weder die gleichen vorteilhaften Merkmale aufgeführt sind noch die bestehenden Nachteile wirkungsvoll behoben werden.

So ist im Dokument ES 1 048 062 U eine Pflugmaschine der verwendeten Art zum Pflügen von Feldern, wie Baumplantagen, Weinanbaufelder etc., beschrieben, die aus einem Hauptrahmen besteht, der mit zwei Satellitenrahmen in Parallelogrammanordnung verbunden ist, dabei sind diese beiden Satellitenrahmen mit dem Hauptrahmen jeweils über einen einklappbaren Arm oder ein klappbares Gelenk verbunden, die im Kopf- und hinteren Bereich angeordnet sind, im Wesentlichen dadurch gekennzeichnet, dass hydraulische Kolben vorhanden sind, die den Zentralbereich des jeweiligen Satellitenrahmens mit dem Zwischenbereich der hinteren Gelenkverbindungen zum Hauptrahmen verbindet. In diesem Dokument wird ein fest angebrachter Grubber bzw. Pflug beschrieben; zudem wird in diesem Dokument ein Pflug beschrieben, der vom einem Zugfahrzeug nicht geschoben, sondern gezogen wird, was nicht zur Lösung der oben genannten Nachteile beiträgt.

Das Dokument ES 2 027 025 U betrifft einen mehrscharigen Aufsattel-Pflug mit vielen Pflugkörpern, die an einer Stange befestigt sind, wobei die Stange aus mindestens zwei Bauteilen ausgebildet ist, die paarweise durch ein Gelenk um eine horizontale Achse herum in Arbeitsposition des Pflugs verbunden sind, dadurch gekennzeichnet, dass der Pflug kehrbar ist und zudem mit Vorrichtungen zum Arretieren des bzw. der genannten Gelenke ausgestattet ist, zumindest während des Manövrierens und speziell während des Wendens der Scharen. Obwohl dieses Dokument einen hilfreichen Beitrag zur Ausrichtung des Pflugs leistet, werden keine geeigneten Merkmale beschrieben, durch die ein Pflug und eine Sämaschine im gleichen Durchgang verwendet werden können.

Im Dokument ES 1 056 860 U wird ein Patent für einen ausfahrbaren Rahmen für die Feldbestellung beantragt, der durch Längsrahmen ausgebildet ist, die am Hauptrahmen mit jeweils ausfahrbaren Querstreben verbunden sind, die über hydraulische Vorrichtungen betätigt werden, dadurch gekennzeichnet, dass: der Hauptrahmen mit einer Schwinge ausgestattet ist, die an einer Drehachse angelenkt ist, und deren beiden Enden mit den Pleuelstangen verbunden sind, die jeweils gelenkig mit den seitlichen Rahmen verbunden sind und über eine ausfahrbare Verbindung verfügen. Der Rahmen besitzt einen einzigen hydraulischen Positionierzylinder, der quer betätigt wird und an einer exzentrischen Stelle der genannten Schwinge so wirkt, dass das Ein- und Ausfahren des hydraulischen Zylinders in beiden Teilen gleichzeitig und in gleicher Weise den Abstand zwischen den Seitenrahmen und dem Hauptrahmens einstellt. Auch in diesem Dokument werden keine geeigneten Merkmale beschrieben, durch die ein Pflug und eine Sämaschine gleichzeitig verwendet werden können, um somit ca. 60 % Diesel, Zeit und Geld zu sparen.

Weiter ist aus der DE 31 36 870 A1 ein schiebbarer, hydraulischer Frontpflug, bekannt, der aus einen Metallrahmen besteht, an dem drei Streichbleche angebracht sind und der an einem Ende von einem Rad abgestützt ist. Der Metallrahmen ist über ein Gelenk mit einer Pflugkoppel verbunden, die mittels eines Dreipunktgestänges an die Front des Zugfahrzeugs anbringbar ist. Das Gelenkt ist so ausgebildet, das der Metallrahmen für den Transport aus der Arbeitsstellung in eine Transportstellung seitlich und nach oben verschwenkbar ist. Ein Nachteil des bekannten Frontpfluges ist die geringe Arbeitsbreite.

Folglich ist kein Pflug bekannt, der durch seine neuen Eigenschaften die oben genannten Nachteile beseitigt, weder in den zitierten Dokumenten noch in anderen Erfindungen oder traditionellen Pflügen, die dem heutigen Stand der Technik entsprechen.

Unter Berücksichtigung der genannten Fälle und der Analyse der zusammengetragenen Argumente führt die hier vorgeschlagen Erfindung zu dem Schluss, dass die Erfindung gegenüber dem heutigen Stand der Technik wesentliche Unterscheidungsmerkmale bietet, mit einer Reihe von Fortschritten in den schon bekannten Bauteilen mit den entsprechenden Vorteilen.

Im Einzelnen:
- Da der Pflug vom Zugfahrzeug geschoben wird, kann an seinem Heck eine Sämaschine angeschlossen werden und somit können verschiedene landwirtschaftliche Arbeiten gleichzeitig ausgeführt werden; dadurch werden nach einer Studie ca. 60 % Zeit, Diesel und Geld gespart. Beispiel: Wenn der Schlepper diesen Pflug schiebt während er gleichzeitig eine Sämaschine mit Doppeltrichter zieht, einen für das Saatgut und den anderen für den Dünger, mit Kreisel oder Grubber, mit Egge und Walze, dies alles bei einer Arbeitsbreite von 2.500 mm; und dies bei einer Durchschnittsgeschwindigkeit von 8 km/h, entspricht dies einer Bodenbearbeitung von 20.000 m² pro Stunde, d. h. in 30 Minuten ist ein Hektar gepflügt, Grubber bzw. Kreisel angewandt, gesät und punktgenau gedüngt, geeggt und gewalzt. Somit werden in einem einzigen Durchgang 6 Arbeiten verrichtet.
- Das Zugfahrzeug hat einen geringeren Verschleiß, verbraucht weniger Diesel und der Schadstoffausstoß ist geringer und somit umweltfreundlicher.
- Da der Pflug frontseitig angebracht ist, muss der Arbeiter nicht ständig den Kopf drehen, um die Pflugarbeit zu überprüfen; dadurch werden Nackenschmerzen und andere Beschwerden vermieden.
- Der Pflug ist mit mindestens 26 Streichblechen ausgestattet, 13 davon pflügen nach links und 13 nach rechts, abwechselnd; dies ermöglicht durch die gleiche Ackerfurche hin- und zurückzufahren, mit einer Arbeitsbreite je Durchgang von 2.620 mm, 201,54 mm je Streichblech, und einer Arbeitstiefe von 150 bis 200 mm; somit wird der Acker gelockert und nicht geschnitten, wodurch einer für den Anbau optimaler Boden geschaffen wird.
- Der Pflug ist gefedert, flach über Kreuz umstellbar und einziehbar, wodurch Straßen und Wege befahren werden können.

Diese Erfindung besteht aus folgenden Bauteilen:
Einem horizontalen Metallrahmen, in Kreuzform, gestützt auf mindestens vier Lagern, an denen jeweils zwei Zwillingsräder montiert sind, die sich um 360° drehen und sich aufgrund der Schwinge an den Bodenverhältnissen anpassen, sie sind gleichmäßig verteilt, um der Gesamtkonstruktion mit zwei Querachsen Stabilität zu verleihen, eine Querachse befindet sich im vorderen Bereich und die andere relativ mittig, ein Dreifuß oder Drehkranz dient zum Anhängen an den Anbau des Zugfahrzeugs, und an der Basis befindet sich eine Aufnahme für Magnetventile und Drehvorrichtungen, die vom Zugfahrzeug gesteuert werden, außerdem sind Schläuche für die Förderung von Flüssigkeiten vorhanden, die mit dem einen Ende am Fahrzeug und mit dem anderen Ende an der Magnetventilaufnahme angeschlossen sind, von dort aus führen die Schläuche zu den zwölf Hydraulikzylindern, vier Zylinder für die Steuerung der Streichbleche, zwei Zylinder für die Steuerung der Arbeitstiefe und zum Heben des Pflugs, zwei Zylinder für die Verbreiterung der Fahrspur der Haupträder und vier Zylinder zum Einziehen des Pflugs für das Befahren von Straßen. Die Drehvorrichtung besteht aus einer horizontalen Querstange, die an der Basis des Dreifußes oder am Drehkranz befestigt ist, diese Basis weist auf der Unterseite schräge Leitschienen unterschiedlicher Stärke auf, die während des Schiebens beim Pflug eine Drehkorrekturbewegung nach rechts oder links bewirken, außerdem blockieren sie die Bewegung des Pflugs, wenn das Zugfahrzeug die Stange nach hinten zieht; das Drehen der Stange kann für den Transport auf Straßen durch einen Zentralbolzen verhindert werden. Der Dreifuß und seine Verbindungselemente befinden sich im hinteren Bereich des Pflugs und werden mit dem Frontanbau des Zugfahrzeugs verbunden, um die Schubbewegung auszuführen. Der Rahmen hält im unteren Bereich zwei horizontale Metallarme in "X"-Form; jeder dieser Arme hält durch eine feste Verbindung mindestens 13 Streichbleche, wobei die Arme die jeweiligen Streichbleche mittels Hydraulikzylindern heben oder senken können. Die gesamte Konstruktion ist höhenverstellbar mittels senkrecht wirkenden Hydraulikzylindern, die jeweils am Ende der Achsen angebracht sind. Mindestens zwei Enden der Arme sind klappbar, wodurch der Pflug für den Straßenverkehr oder für das Befahren des Landguts eine zweckmäßige Breite erhält. Auch der vordere Bereich des Pflugs ist klappbar, dies erfolgt entlang der relativ zentralen Achse der Konstruktion und mit Hilfe (zweier) parallel angeordneter Hydraulikzylinder, die an einem Ende im vorderen Bereich und mit dem anderen Ende im hinteren Bereich des Rahmen befestigt sind. Die relativ zentrale Achse weist an ihren Enden horizontal angeordnete Hydraulikzylinder auf, die die Länge dieser Achse regeln.

Der Pflug wird durch eine durch das Zugfahrzeug ausgelöste Schubbewegung benutzt, wobei ein Arm abgesenkt und der andere oben ist.

Zum besseren Verständnis dieser Beschreibung werden Zeichnungen hinzugefügt, die beispielhaft und nicht einschränkend eine bevorzugte Verwendung der Erfindung beschreiben:

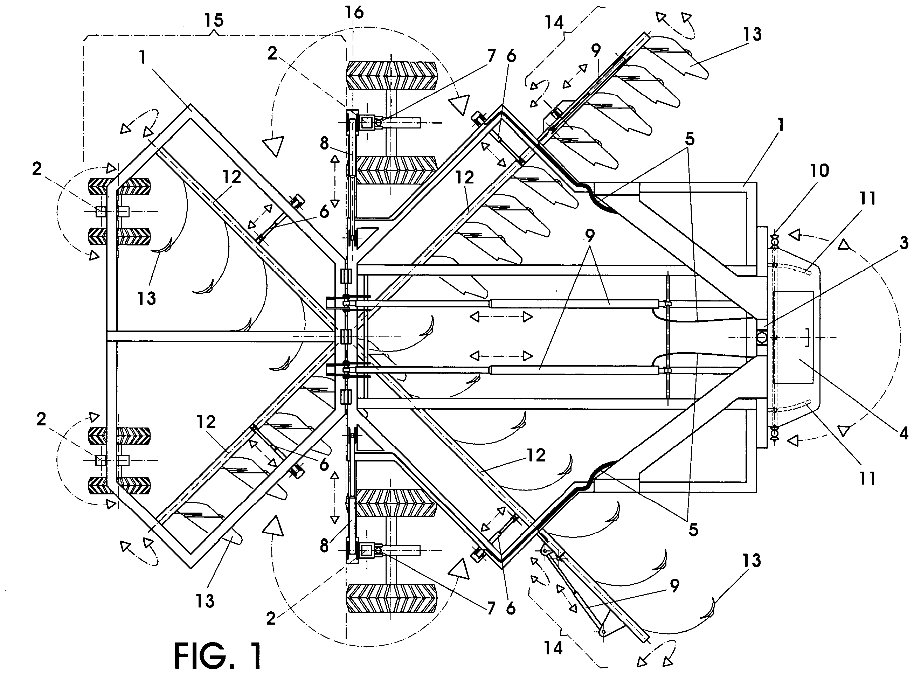

Figur 1.- Draufsicht

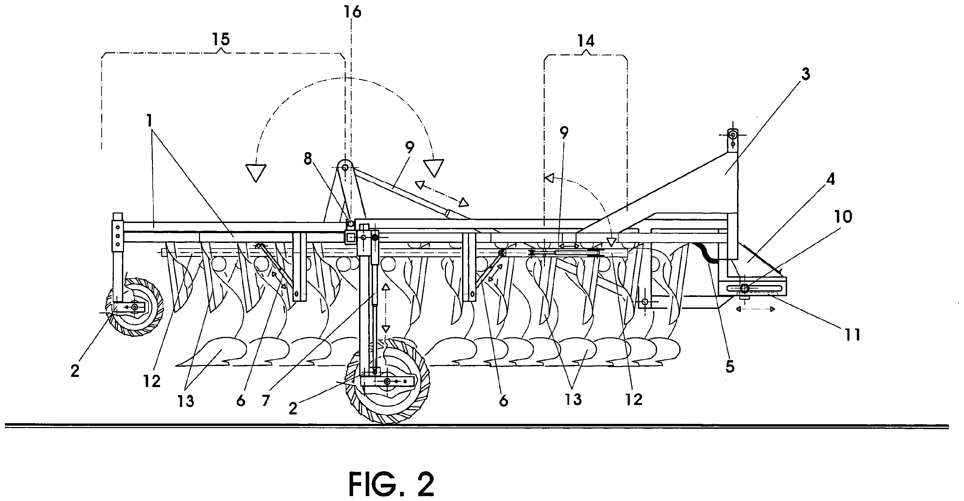

Figur 2.- Seitenriss

Diese Figuren zeigen folgende nummerierte Bestandteile:
1. Metallrahmen
2. Lager
3. Dreifuß oder Drehkranz
4. Aufnahme für Magnetventile
5. Schläuche
6. Zylinder zur Steuerung der Streichbleche
7. Zylinder zur Steuerung der Arbeitstiefe
8. Zylinder zur Verbreiterung der Fahrspur der Haupträder
9. Zylinder zum Einziehen des Pflugs zum Befahren von Straßen
10. Lenkstange
11. Leitschienen
12. horizontale Metallarme
13. Streichbleche
14. Enden der klappbaren Arme
15. vorderer mittlerer Bereich, klappbar
16. Mittelachse

Eine bevorzugte Ausführungsform der Erfindung ergibt sich aus folgenden Bauteilen: Einem horizontalen Metallrahmen (1), in Kreuzform, gestützt auf mindestens vier Lagern (2), an denen jeweils zwei Zwillingsräder montiert sind, die sich um 360° drehen und sich aufgrund der Schwinge an den Bodenverhältnissen anpassen, sie sind gleichmäßig verteilt, um der Gesamtkonstruktion mit zwei Querachsen Stabilität zu verleihen, eine Querachse befindet sich im vorderen Bereich und die andere relativ mittig, ein Dreifuß oder Drehkranz (3) dient zum Anhängen an den Anbau des Zugfahrzeugs, und an der Basis befindet sich eine Aufnahme für Magnetventile (4) und Drehvorrichtungen, die vom Zugfahrzeug gesteuert werden, außerdem sind Schläuche (5) für die Förderung von Flüssigkeiten vorhanden, die mit dem einen Ende am Fahrzeug und mit dem anderen Ende an der Magnetventilaufnahme angeschlossen sind, von dort aus führen die Schläuche zu den zwölf Hydraulikzylindern, vier Zylinder für die Steuerung der Streichbleche (6), zwei Zylinder für die Steuerung der Arbeitstiefe (7) und zum Heben des Pflugs, zwei Zylinder für die Verbreiterung der Fahrspur der Haupträder (8) und vier Zylinder zum Einziehen des Pflugs für das Befahren von Straßen (9). Die Drehvorrichtung besteht aus einer horizontalen Querstange (10), die an der Basis des Dreifußes oder am Drehkranz (3) befestigt ist, diese Basis weist auf der Unterseite schräge Leitschienen (11) unterschiedlicher Stärke auf, die während des Schiebens beim Pflug eine Drehkorrekturbewegung nach rechts oder links bewirken, außerdem blockieren sie die Bewegung des Pflugs, wenn das Zugfahrzeug die Stange nach hinten zieht; das Drehen der Stange (10) kann für den Transport auf Straßen durch einen Zentralbolzen verhindert werden. Der Dreifuß und seine Verbindungselemente befinden sich im hinteren Bereich des Pflugs und werden mit dem Frontanbau des Zugfahrzeugs verbunden, um die Schubbewegung auszuführen. Der Rahmen hält im unteren Bereich zwei horizontale Metallarme (12) in "X"-Form; jeder dieser Arme hält durch eine feste Verbindung mindestens dreizehn Streichbleche (13), wobei die Arme die jeweiligen Streichbleche mittels Hydraulikzylindern heben oder senken können. Die gesamte Konstruktion ist höhenverstellbar mittels senkrecht wirkenden Hydraulikzylindern, die jeweils am Ende der Achsen angebracht sind. Mindestens zwei Enden der Arme sind klappbar (14), wodurch der Pflug für den Straßenverkehr oder für das Befahren des Landguts eine zweckmäßige Breite erhält. Auch der vordere Bereich des Pflugs ist klappbar (15), dies erfolgt entlang der relativ zentralen Achse der Konstruktion und mit Hilfe parallel angeordneter Hydraulikzylinder, die an einem Ende im vorderen Bereich und mit dem anderen Ende im hinteren Bereich des Rahmen befestigt sind. Die relativ zentrale Achse (16) weist an ihren Enden horizontal angeordnete Hydraulikzylinder auf, die die Länge dieser Achse regeln.

## Patentansprüche

1. Hydraulischer Pflug, der dazu eingerichtet ist, von einem Zugfahrzeug geschoben zu werden, bestehend aus einem horizontalen Metallrahmen (1), in Kreuzform, gestützt auf mindestens vier Lager (2), an denen jeweils zwei Zwillingsräder montiert sind, die sich um 360° drehen und sich aufgrund einer Schwingeinrichtung an die Bodenverhältnisse anpassen, und die gleichmäßig verteilt sind, um der Gesamtkonstruktion mit zwei Querachsen Stabilität zu verleihen, wobei eine Querachse in einem vorderen Bereich und die andere relativ mittig angeordnet ist, wobei ein Dreifuß oder Drehkranz (3) zum Anhängen an den Frontanbau des Zugfahrzeugs dient und wobei sich an einer Basis eine Aufnahme für Magnetventile (4) und Drehvorrichtungen befindet, die vom Zugfahrzeug steuerbar sind, und wobei Schläuche (5) für die Förderung von Flüssigkeiten vorhanden sind, die mit dem einen Ende am Zugfahrzeug und mit dem anderen Ende an der Magnetventilaufnahme anschließbar sind, von wo aus die Schläuche (5) zu Hydraulikzylindern führen, wobei vier Hydraulikzylinder für die Steuerung von Streichblechen (6), zwei Hydraulikzylinder für die Steuerung der Arbeitstiefe (7) und zum Heben des Pflugs, zwei Hydraulikzylinder für die Verbreiterung der Fahrspur der als Haupträder (8) dienenden Zwillingsräder und vier Hydraulikzylinder zum Einziehen des Pflugs für das Befahren von Straßen (9) vorhanden sind.

2. Hydraulischer Pflug nach Anspruch 1,
bei dem die Drehvorrichtung aus einer horizontalen Querstange (10) besteht, die an der Basis des Dreifußes oder am Drehkranz (3) befestigt ist, wobei diese Basis auf der Unterseite schräge Leitschienen (11) unterschiedlicher Stärke aufweist, die während des Schiebens beim Pflug eine Drehkorrekturbewegung nach rechts oder links bewirken und die außerdem die Bewegung des Pflugs blockieren, wenn das Zugfahrzeug die Querstange (10) nach hinten zieht, wobei das Drehen der Querstange (10) für den Transport auf Straßen durch einen Zentralbolzen verhindert werden kann.

3. Hydraulischer Pflug nach Anspruch 1 bis 3,
bei dem sich der Dreifuß (3) und seine Verbindungselemente im hinteren Bereich des Pflugs befinden und mit dem Frontanbau des Zugfahrzeugs verbindbar sind, um die Schubbewegung auszuführen, und bei dem der Metallrahmen (1) im unteren Bereich zwei horizontale Metallarme (12) in "X"-Form hält, wobei jeder dieser Arme durch eine feste Verbindung mindestens dreizehn Streichbleche (13) hält, wobei die Metallarme (12) die jeweiligen Streichbleche (13) mittels Hydraulikzylindern heben oder senken können.

4. Hydraulischer Pflug, nach Anspruch 1 bis 3,
bei dem die gesamte Konstruktion mittels senkrecht wirkenden Hydraulikzylindern höhenverstellbar ist, die jeweils am Ende der Achsen angebracht sind und bei dem mindestens zwei Enden (14) der Metallarme (12) klappbar sind, wodurch der Pflug für den Straßenverkehr oder für das Befahren des Landguts eine zweckmäßige Breite erhält.

5. Hydraulischer Pflug, nach Anspruch 1 bis 4,
bei dem der vordere Bereich des Pflugs klappbar ist (15), wobei dies entlang einer relativ zentralen Achse (16) der Konstruktion und mit Hilfe parallel angeordneter Hydraulikzylinder erfolgt, die an einem Ende im vorderen Bereich und mit dem anderen Ende im hinteren Bereich des Metallrahmens (1) befestigt sind, und bei dem die relativ zentrale Achse (16) an ihren Enden horizontal angeordnete Hydraulikzylinder aufweist, die die Länge dieser Achse (16) regeln.

## Claims

1. Hydraulic plow arranged to be pushed by a towing vehicle, consisting of a horizontal metal frame (1), in a cross shape, supported by at least four bearings (2), each of which has two twin wheels mounted thereon, which that rotate through 360 ° and adapt to the ground conditions by means of a swinging device, and which are evenly distributed in order to provide stability to the overall construction with two transverse axes, one transverse axis being arranged in a front area and the other being arranged relatively centrally, wherein a tripod or turntable (3) serves for attaching to the front mount of the towing vehicle, and wherein, at a base, a receptacle for solenoid valves (4) and rotating devices is located, which can be controlled by the towing vehicle, and wherein hoses (5) for conveying liquids are provided, whose one end can be connected to the towing vehicle and whose other end can be connected to the solenoid valve holder, from where the hoses (5) lead to hydraulics cylinders, wherein four hydraulic cylinders are provided for the control of mouldboards (6), two hydraulic cylinders are provided for the control of the working depth (7) and for lifting the plow, two hydraulic cylinders are provided for widening the lane of the twin wheels serving as main wheels (8) and four hydraulic cylinders are provided for pulling in the plow for driving on roads (9).

2. Hydraulic plow according to claim 1,
in which the rotating device consists of a horizontal crossbar (10) which is fixed to the base of the tripod or turntable (3), this base having inclined guide rails (11) of different thickness on the underside, which during pushing cause the plow to make a right or left turn correction and also block the plow from moving when the towing vehicle pulls the crossbar (10) backwards, wherein the turning of the cross bar (10) can be prevented by a central pin for transport on roads.

3. Hydraulic plow according to claim 1 to 3,
in which the tripod (3) and its connecting elements are located in the rear area of the plow and can be connected to the front mount of the towing vehicle in order to carry out the pushing movement, and in which the metal frame (1) holds two horizontal metal arms (12) in "X" shape in the lower area, each of these arms holding at least thirteen mouldboards (13) by means of a fixed connection, the metal arms (12) being able to raise or lower the respective mouldboards (13) by means of hydraulic cylinders.

4. Hydraulic plow, according to claim 1 to 3,
in which the entire construction can be adjusted in height by means of vertically acting hydraulic cylinders, which are each attached to the end of the axles, and in which at least two ends (14) of the metal arms (12) can be folded, so that the plow receives an appropriate width for road traffic or for driving on the country estate .

5. Hydraulic plow, according to claims 1 to 4,
in which the front part of the plow is foldable (15), this taking place along a relatively central axis (16) of the construction and with the aid of hydraulic cylinders arranged in parallel and being attached with one end to a front part and with the other end to a rear part of the metal frame (1), and in which the relatively central axis (16) has horizontally arranged hydraulic cylinders at its ends, which adjust the length of this axis (16).

## Revendications

1. Charrue hydraulique qui est configurée pour être poussée par un véhicule tracteur, constituée d'un châssis métallique horizontal (1), en forme de croix, appuyé sur au moins quatre paliers (2) sur lesquels à chaque fois deux roues jumelles sont montées, qui tournent de 360° et s'adaptent aux conditions de sol en raison d'un dispositif oscillant, et qui sont réparties de manière régulière pour conférer de la stabilité à la construction globale avec deux essieux transversaux, dans laquelle un essieu transversal est disposé dans une région avant et l'autre est disposé relativement au milieu, dans laquelle un trépied ou une couronne d'orientation (3) sert à la suspension à la construction surajoutée avant du véhicule tracteur et dans laquelle un logement pour électrovannes (4) et dispositifs rotatifs qui peuvent être commandés par le véhicule tracteur se trouve sur une base, et dans laquelle des tuyaux (5) pour le transport de liquides sont présents, lesquels peuvent être raccordés avec une des extrémités au véhicule tracteur et avec l'autre extrémité au logement d'électrovanne, à partir d'où les tuyaux (5) mènent à des cylindres hydrauliques, dans laquelle quatre cylindres hydrauliques pour la commande de versoirs de charrue (6), deux cylindres hydrauliques pour la commande de la profondeur de travail (7) et pour le levage de la charrue, deux cylindres hydrauliques pour l'élargissement de la voie de circulation des roues jumelles servant de roues principales (8) et quatre cylindres hydrauliques pour la rétraction de la charrue pour la fréquentation de routes (9) sont présents.

2. Charrue hydraulique selon la revendication 1,
dans laquelle le dispositif rotatif se compose d'une barre transversale horizontale (10) qui est fixée à la base du trépied ou à la couronne d'orientation (3), dans laquelle cette base présente une épaisseur différente sur le côté inférieur de contre-rails en biais (11) qui entraînent pendant la poussée sur la charrue un mouvement de correction de rotation vers la droite ou la gauche et qui bloquent en outre le mouvement de la charrue lorsque le véhicule tracteur tire la barre transversale (10) vers l'arrière , dans laquelle la rotation de la barre transversale (10) peut être empêchée par un boulon central pour le transport sur des routes.

3. Charrue hydraulique selon les revendications 1 à 3,
dans laquelle le trépied (3) et ses éléments de connexion se trouvent dans la région arrière de la charrue et peuvent être connectés à la construction surajoutée avant du véhicule tracteur pour réaliser le mouvement de poussée, et dans laquelle le châssis métallique (1) porte dans la région inférieure deux bras métalliques horizontaux (12) en forme de « X » , dans laquelle chacun de ces bras porte par un raccordement fixe au moins treize versoirs de charrue (13), dans laquelle les bras métalliques (12) peuvent soulever ou abaisser les versoirs de charrue respectifs (13) au moyen de cylindres hydrauliques.

4. Charrue hydraulique selon les revendications 1 à 3,
dans laquelle la construction globale est réglable en hauteur au moyen de cylindres hydrauliques à action verticale qui sont montés chacun à l'extrémité des essieux et dans laquelle au moins deux extrémités (14) des bras métalliques (12) peuvent être rabattues, moyennant quoi la charrue conserve une largeur adéquate pour la circulation routière ou pour le parcours du domaine.

5. Charrue hydraulique selon les revendications 1 à 4,
dans laquelle la région avant de la charrue peut être rabattue (15), dans laquelle cela se produit le long d'un essieu relativement central (16) de la construction et à l'aide de cylindres hydrauliques disposés parallèlement qui sont fixés à une extrémité dans la région avant et à l'autre extrémité dans la région arrière du châssis métallique (1), et dans laquelle l'essieu relativement central (16) présente à ses extrémités des cylindres hydrauliques disposés horizontalement qui régulent la longueur de cet essieu (16).
